# EUROPEAN PATENT APPLICATION

(11) **EP 4 711 277 A1**
(43) Date of publication of application: **18.03.2026**
(21) Application number: 24461619.9
(22) Date of filing: 13.09.2024
(51) Int. Cl.: B64D 11/06, B60N 3/00

(54) **FOLDABLE TABLE**

(71) Applicant: B/E Aerospace, Inc., Winston Salem, NC 27105 (US)
(72) Inventor: KOLODZIEJCZAK, Marcin Szymon, 51-317 Wroc aw (PL); KALISZCZYK, Piotr Krzysztof, 51-317 Wroclaw (PL); CHODYNIECKI, Marcin Adam, 51-317 Wroc aw (PL)
(74) Representative: Dehns

(57) **Abstract**

A foldable table comprising: a main table plate (1); an ancillary table plate (2); a folding mechanism (10, 11, 12, 13) pivotally connecting the main table plate and the ancillary table plate together, the folding mechanism comprising a pair of side mountings (10), one on each side of the table, and an arrangement of pivot arms (11, 12, 13) configured such that movement of the main table plate in an opening direction (D) relative to the side mountings causes a corresponding and substantially parallel opening of the ancillary table plate (2).

## Description

### TECHNICAL FIELD

The present disclosure is concerned with a foldable table having an integrated ancillary surface or shelf e.g. for additional table surface area and/or as a holder for e.g. cups/beverages or other items.

### BACKGROUND

Foldable tables are used in a wide range of applications where, for example, space is limited but where a table may be needed at times. Such tables may be provided in a cavity of a wall or other surface e.g. a seat back of a vehicle/aircraft in a stowed state and are configured to be opened out for deployment when a table surface is needed. There is sometimes a need for a greater surface area than the stowed table surface is able to provide (e.g. because of constraints on the area of the cavity in which the table is stowed). It would be desirable to provide a foldable table that can be stowed in such available areas, but which, when deployed, can provide additional table surface area.

### SUMMARY

According to this disclosure, there is provided a foldable table having a main table plate and an ancillary table plate pivotally attached thereto such that folding out of the main table plate for deployment thereof also causes the ancillary plate to fold out in parallel with the main table plate.

In one aspect, there is provided a foldable table comprising: a main table plate; an ancillary table plate; a folding mechanism pivotally connecting the main table plate and the ancillary table plate together, the folding mechanism comprising a pair of side mountings, one on each side of the table, and an arrangement of pivot arms configured such that movement of the main table plate in an opening direction relative to the side mountings causes a corresponding and substantially parallel opening of the ancillary table plate.

The arrangement of pivot arms may comprise, for each side of the table, a first pivot arm pivotally connected at one end to the main table plate and pivotally connected at the other end to the respective side mounting.

The arrangement of pivot arms may further comprise, for each side of the table, a second pivot arm pivotally connected at one end to the main table plate and pivotally connected at the other end to the ancillary table plate.

The arrangement of pivot arms may further comprise, for each side of the table, a third pivot arm pivotally connected at one end to the main table plate and pivotally connected at the other end to the ancillary table plate.

The third pivot arm may be connected to each of the main table plate and the ancillary table plate at a location on the side of the respective plate spaced from a location at which the second pivot arm is connected.

Surface features such as cup holder features and/or electrical connectors etc. may be provided on a table surface of one or both of the main table plate and the ancillary table plate to prevent slippage of items on the respective table surface.

Also provided is a seat back having a foldable table as defined above, mounted thereto via the side mountings being fixed to the seat back, the table being foldable relative to the seat back.

### BRIEF DESCRIPTION

Examples of the foldable table of this disclosure will now be described with reference to the drawings. It should be noted that these are examples only and that variations are possible within the scope of the claims. The description is for a table stowable in the seat of a passenger vehicle, specifically an aircraft. This is, however, only one example of the application of the foldable table and the table can also be used in other environments where a foldable table is desired.
Figure 1 is a perspective view of an example of a foldable table according to the disclosure.
Figure 2 is a side view of a table such as shown in Fig. 1, in an opened out state.
Figures 3A, 3B and 3C illustrate the table of Figs. 1 and 2 moving from a stowed or closed state to an open or deployed state.

### DETAILED DESCRIPTION

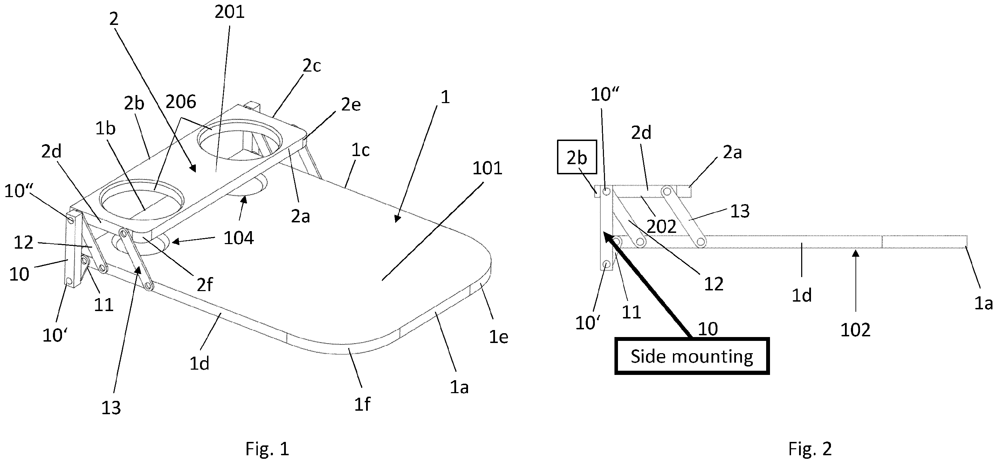

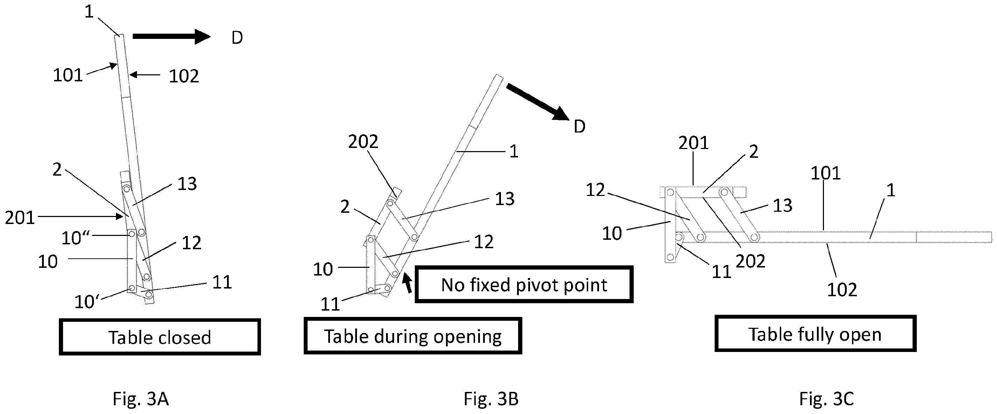

The foldable table according to the disclosure comprises a main table plate 1, which has a table surface 101 extending from a first, front, end 1a to a second, rear, end 1b and has sides 1c and 1d extending from the first to the second end. The surface of the main table plate opposite the table surface 101 provides a table back 102. In the open or deployed state as shown in Figs. 1 and 2, and also in Fig. 3C, the table surface 102 is positioned to provided a substantially horizontal, upwardly facing table surface for use as a table or surface by a user.

The main table plate 1 is foldable relative to a stow structure e.g. a seat back or a wall or other structure into which the table can be stowed when not in use. The main table plate 1 is foldable by means of a folding mechanism comprising an arrangement of arms as will be described further below.

The foldable table of the disclosure also includes an ancillary table plate 2 for providing additional table surface area when the table is in the open state. The ancillary table 2 is attached to the main table plate 1 by means of the arms, (described further below) such that as the main table plate 1 is folded out, the ancillary table plate 2 also folds out substantially in parallel with the main table plate 1.

The ancillary table plate 2 also has an ancillary table surface 201 and an opposite ancillary table back 202 extending from an ancillary table plate first, front, end 2a to an ancillary table plate second, rear, end 2b, with two sides 2c, 2d extending from the front to the rear ends.

In the example shown, the ancillary table plate 2 is shorter (the length being defined between the front and rear ends 2a, 2b) than the main table plate 1 but there are no limitations on the relative lengths provided the longest length of either the main table plate or the ancillary table plate is able to fit within the space into which it is designed to be stowed.

In the example shown, the main and ancillary table plates are shown to have rounded corners 1e, 1f, 2e, 1f at the front end 1a, 2a for improved aesthetics and possibly comfort and safety, but other shapes are also possible.

The ancillary table plate 2 can be a simple shelf providing an additional surface. Also, or alternatively, the ancillary table plate 2 may be provided with features such as recesses or holes or other holder features to hold items such as cups or glasses and/or for holding items such as mobile phones, spectacles, pens etc. in a secure manner. The ancillary table plate 2 may also be provided with features such as electrical connectors or terminals e.g. one or more USB ports, headphone sockets, charging terminals or the like. In the example shown, the ancillary table plate 2 is provided with two openings 204 to receive a cup. These main be holes extending through the ancillary table plate or could be recesses extending only partially through the plate 2. In the case of holes, the main table plate 1 may also be provided with recesses 104 aligned, when in the open state, with the holes in the ancillary table plate, to receive the bottoms of cups placed in the holes.

The folding mechanism will now be described.

The folding mechanism comprises a pair of side mountings 10 arranged to be attached one to each side of the main table plate 1 and the ancillary table plate, at or close to the rear end 1b, 2b of the plates 1,2 as described further below. The side mountings are also configured to be fixedly attached to the structure where the table is stowed and from which the table is folded out, e.g. the seat back.

Each side mounting has a first attachment point 10' for attachment to the main table plate 1 and a second attachment point 10" for attachment to the ancillary table plate 2. Only one side at the folding mechanism will be described in detail, but it should be noted that the other side is attached and operates in the same way.

The main table plate 1 is attached to the first attachment point 10' of each side mounting 10 by means of a first pivot arm 11 that is pivotally attached at a first end to the main table plate 1 and pivotally attached at its other end to the first attachment point of the side mounting. Thus, as the table is folded out it pivots relative to the side mounting about the arc described by the pivoting of the first pivot arm 11.

The ancillary table plate 2 is pivotally attached to the second attachment point 10" of each side arm and is also attached to the main table plate 2 by means of a second pivot arm 12 which is pivotally attached at a first end to the main table plate and, at the other end, to the ancillary table plate 2 where it is attached to the side mounting at the second attachment point.

Additional reinforcement and strengthening for the ancillary table plate 2 may be provided by having a third pivot arm 13 pivotally attached, at one end, to the main table plate 1 at a location along the side 1c, 1d spaced from the attachment of the second pivot arm, and attached at the other end to the ancillary table plate 2 at a location along the side 2c, 2d spaced from the attachment of the second pivot arm. This provides additional support for the ancillary table plate 2 when in the open state.

The folding operation of the table will now be described with reference to the example shown in Figs. 3A to 3C.

Fig. 3A shows the table in a closed or stowed position. This may be folded/stowed relative to another surface or structure e.g. a wall or piece of furniture or into a seat back of a seat in a vehicle/aircraft. The structure/seat may be provided with a cavity into which the table is stowed, and this may be designed such that the table, when stowed, is flush with the surface of the structure so that it is unobtrusive. The back 102 of the table may be provided with a covering or cushioning or some other facade to match the structure into which it is stowed and/or to provided a cushioned surface to form e.g. a part of a seat back into which the table is stowed.

In this closed position, the side mountings 10 are in a fixed position e.g. fixed relative to the other structure. The main table plate 1 is folded up relative to the first pivot arm 11 to extend in substantially the same direction as the side mountings. The ancillary table plate 2 is also pivoted up relative to the side mounting 10 to also extend in substantially the same direction as the side mountings and the main table plate. In this position, where the main table plate, the ancillary table plate and the side mountings are all folded substantially together, the second pivot arm 12 and, where present, the third pivot arm 13 also extend in substantially the same plane as the side mountings and the table plates 1,2.

To open the table from its closed position (Fig. 3B), the main table plate 1 is pulled out from the stowed state in direction D but a user. This may be simplified by means of a tab or other feature on the front end or back of the main table plate 2 which can be grasped by a user, but it is also possible for the user just to grasp some part of the main table plate 2. As the main table plate 1 is moved in direction D, it pivots relative to the first pivot arm 11 which can also pivot relative to the side mounting to provide clearance for any cushioning or other obstruction near the rear end 1b of the main table plate 1 as it unfolds.

The main table plate 1 also pivots relative to the second (and, optionally, third) pivot arms and, at the same time draws their first ends in direction D to unfold them. These pivot arms also unfold relative to the ancillary table plate 2 and also draw that plate 2 in direction D in parallel to the main table plate 1.

Fig. 3C shows the table in its fully opened position where the pivot arms 11, 12, 13 are unfolded and the ancillary table plate is supported substantially parallel to the main table plate 1.

To re-stow the table to the closed position, the reverse procedure is followed, pushing the main table plate 1 in a direction opposite to direction D to fold the pivot arms together.

## Claims

1. A foldable table comprising:
a main table plate (1);
an ancillary table plate (2);
a folding mechanism (10, 11, 12, 13) pivotally connecting the main table plate and the ancillary table plate together, the folding mechanism comprising a pair of side mountings (10), one on each side of the table, and an arrangement of pivot arms (11, 12, 13) configured such that movement of the main table plate in an opening direction (D) relative to the side mountings causes a corresponding and substantially parallel opening of the ancillary table plate (2).

2. The foldable table according to claim 1, wherein the arrangement of pivot arms comprises, for each side of the table, a first pivot arm (11) pivotally connected at one end to the main table plate and pivotally connected at the other end to the respective side mounting.

3. The foldable table according to claim 2, wherein the arrangement of pivot arms further comprises, for each side of the table, a second pivot arm (12) pivotally connected at one end to the main table plate (1) and pivotally connected at the other end to the ancillary table plate (2).

4. The foldable table according to claim 3, wherein the arrangement of pivot arms further comprises, for each side of the table, a third pivot arm (13) pivotally connected at one end to the main table plate (1) and pivotally connected at the other end to the ancillary table plate (2).

5. The foldable table according to claim 4, wherein the third pivot arm (13) is connected to each of the main table plate and the ancillary table plate at a location on the side of the respective plate spaced from a location at which the second pivot arm (12) is connected.

6. The foldable table according to any preceding claim, further comprising surface features provided on a table surface of one or both of the main table plate and the ancillary table plate to prevent slippage of items on the respective table surface.

7. The foldable table according to claim 6, wherein the surface features include cup holder features for prevent slippage of one or more cups from the respective surface.

8. The foldable table of claim 7, wherein the cup holder features include one or more openings (204) in the surface.

9. The foldable table of claim 8, wherein the one or more openings (204) are formed in the ancillary table plate (2).

10. The foldable table of claim 9, wherein the one or more openings (204) comprise holes through the ancillary table plate (2).

11. The foldable table of claim 10, further comprising recesses in the main table plate which, in the open state, are aligned with the holes (204) in the ancillary plate.

12. The foldable table of any preceding claim, further comprising one or more electrical connectors in the ancillary table plate (2).

13. The foldable table of any preceding claim, further providing a cover or cushioning on a back side of the main table plate.

14. The foldable table of any preceding claim, wherein the length of the ancillary table plate (2) defined in the direction of the plate extending from the side mountings (10) when in the open state, is shorter than that of the main table plate (1).

15. A seat back having a foldable table as claimed in any preceding claim mounted thereto via the side mountings (10) being fixed to the seat back, the table being foldable relative to the seat back.
